**Europäisches Patentamt**

**European Patent Office**

**Office européen des brevets**

(11) Veröffentlichungsnummer: **0 433 647 A1**

(12) **EUROPÄISCHE PATENTANMELDUNG**

(21) Anmeldenummer: **90121580.6**

(51) Int. Cl.⁵: **A01D 34/74, A01D 75/18**

(22) Anmeldetag: **12.11.90**

(30) Priorität: **23.11.89 DE 8913838 U**
**24.10.90 DE 4033736**

(43) Veröffentlichungstag der Anmeldung:
**26.06.91 Patentblatt 91/26**

(84) Benannte Vertragsstaaten:
**AT BE CH DE DK ES FR GB IT LI NL SE**

(71) Anmelder: **Alois Pöttinger Maschinenfabrik GmbH**

**A-4710 Grieskirchen(AT)**

(72) Erfinder: **Leposa, Wolfgang**
**Sonnfeldstrasse 17**
**A-4710 Grieskirchen(AT)**
Erfinder: **Lehner, Josef, Dipl.-Ing.**

**A-4732 St. Thomas Nr. 12(AT)**

(74) Vertreter: **Dupal, Helmut, Dipl-Ing.**
**Jägerweg 12**
**A-4702 Wallern(AT)**

(54) **Rotationsmähwerk.**

(57) Rotationsmähwerk mit wenigstens zwei Mähkreiseln, die an einem obenliegenden Mähwerksrahmen jeweils mit einer Antriebswelle 3 gelagert sind, bei denen ein Mähteller 5 mittels Mähtellernabe 4 mit der Antriebswelle verdrehfest verbunden ist, auf der wenigstens ein Stützteller 6,8 oder 57 mit Höhenverstellvorrichtung 10 in seinem Abstand zum Mähteller 5 einstellbar ist, wobei die Stütztellerlagerung 13 und die Höhenverstellvorrichtung 10 mittels einer Abdichtung 12 in Form eines Faltenbalges 14 oder mehrerer Hüllrohre 17, 22, 23 und/oder 24 vor eindringendem Schmutz und Feuchtigkeit geschützt sind.

## Fig. 1

# ROTATIONSMÄHWERK

Die Erfindung bezieht sich auf ein Rotationsmähwerk mit wenigstens zwei Mähkreiseln, die an einem obenliegenden Mähwerksrahmen jeweils mit ihrer Antriebswelle gelagert sind, auf der die Mähtellernabe unverdrehbar befestigt ist und an der ein zur Antriebswelle frei verdrehbarer Stützteller gelagert ist, der axial verstellbar den Abstand des Mähtellers zum Boden einstellt.

Bei Maschinen dieser Gattung ist die Höhenverstellung des Mähtellers zur Veränderung der Schnitthöhe des Mähwerkes sehr aufwendig, wenn die Verstellung selbst einfach und störungsfrei möglich sein soll.

Bei einer Art von Ausführungsformen dieser Mähwerke wird der Stützteller geteilt und ein innerer Teil für die Höhenverstellung axial verschiebbar angeordnet, wodurch eine günstige Aufteilung der bei der Arbeit auftretenden Stützkräfte möglich ist, während der Spalt zwischen Mähteller und Stützteller konstant gehalten worden kann.

Nachteilig ist der sehr aufwendige Aufbau der Höhenverstellung und der große Spalt zwischen innerem und äußeren Stützteller, durch den Erde und Pflanzenreste ins Innere des Mähwerkes gelangen können und daraus sehr schwer zu entfernen sind. Dadurch können Schmutz und Feuchtigkeit in die Höhenverstellvorrichtung und in die Stütztellerlagerung eindringen und zu schweren Störungen oder Schäden Anlaß geben.

Das gleiche Problem tritt auf, wenn der Stützteller gegen den Mähteller axial verschiebbar angeordnet ist, weil besonders bei größeren Mähhöhen ebenfalls Erde und Pflanzenreste leicht eindringen können.

Zweck der Erfindung ist es ein Rotationsmähwerk so zu verbessern, daß dieser beschriebene Nachteil nicht mehr auftritt und dadurch Störungen durch Verschmutzung und Feuchtigkeit vermieden werden.

Dies wird bei einem Rotationsmähwerk der eingangs beschriebenen Gattung mit den Merkmalen des kennzeichnenden Teiles des Anspruches 1 oder des Nebenanspruches 2 erreicht.

Die Unteransprüche 3 bis 10, die gleichzeitig ebenso wie die Ansprüche 1 und 2 Bestandteil der Beschreibung sind, betreffen besonders vorteilhafte Ausgestaltungen der Erfindung.

Es wird dadurch eine einfache funktionssichere Abdichtung der empfindlichen Teile der Stütztellerlagerung und der Höhenverstellvorrichtung geschaffen, deren Dichtränder gering zu halten sind. Das Eindringen von Schmutz und Feuchtigkeit in die empfindlichen Teile des Mähwerkes wird damit wirkungsvoll verhindert.

Besonders günstig ist die Anwendung eines höhenausgleichenden, vollständig abschließenden Dichtmittels, das eng umschließend an der Stütztellerlagerung und der Höhenverstellvorrichtung angebracht ist, wodurch die Länge des Dichtrandes gering gehalten wird.

Eine wirksame Dichtungsmöglichkeit besteht in der Anwendung von Dichtlippen und Nuten für die Abdichtung der Dichtränder oder durch Anwendung eines Hüllrohres, das eine enge Einschließung der abzudichtenden Teile und eine teilweise Überbrückung des zu dichtenden Abstandes mit einem starren Element ermöglicht.

Zur Abdichtung von gegeneinander drehenden Teilen ist die einseitige Lagerung des Dichtmittels auf einem Wälzlager eine sehr einfache und wirksame Lösung.

Weiters ist das Hüllrohr als starres Dichtungsmittel mittels eines Flansches mit Dichtung sehr einfach und haltbar abzudichten, wobei die Verschraubung an einer Stütztellernabe die vereinfachende Möglichkeit bietet, den Hüllrohrflansch mitzuverschrauben.

Bei Anwendung einer Abdichtung mit zwei Hüllrohren als starre Abdichtungsmittel ist deren abstreifende Führung ineinenander wesentlich, wobei die beiden Hüllrohre mit den Flanschen auf den Stütztellernaben, in einfacher Weise, gedichtet aufgeschraubt sind.

Als weitere Verbesserung ist die zusätzliche Anwendung eines weiteren Hüllrohres möglich.

Das jeweils äußerste Hüllrohr ist dabei mit einem Abstreifring, zum Entfernen von Schmutz und Feuchtigkeit von der Hüllrohroberfläche, versehen.

Die Erfindung wird nachstehend an Hand von zwei, in der Zeichnung wiedergegebenen Beispielen beschrieben.

Es zeigt:

Fig. 1 einen Ausschnitt aus einer Mahtrommel, am stütztellerseitigen Ende geschnitten, mit einer Faltenbalgdichtung,

Fig. 2 einen gleichen Ausschnitt aus einer Mähtrommel mit einer Hüllrohrdichtung,

Fig. 3 einen Teilausschnitt aus Fig. 2, mit einer Hüllrohranordnung, durch ein weiteres Hüllrohr abgeändert und

Fig. 4 einen Teilausschnitt aus Fig. 1, jedoch mit der Abänderung, daß nur ein Mähteller und ein einziger Stützteller vorgesehen sind.

Bei einem Trommelmähwerk ist an einem Führungsrohr 2, das mit dem Maschinenrahmen fest verbunden ist, eine Mähtellernabe 4 frei drehbar gelagert, an der der Mähteller 5 angeflanscht verschraubt ist. Durch das Führungsrohr 2 ist die Antriebswelle 3 hindurchgeführt, die an ihrem unteren Ende mit einer Feder-Nutverbindung 51 an der Mähtellernabe 4 verkeilt ist.

Der Mähteller 5 trägt am Außenrand mehrere Mähwerkzeuge -nicht dargestellt -. Auf den Mähteller 5 ist ein Mähtrommelzylinder 1, für die Führung des Mähgutes und zur Abdeckung des Mähtellers 5 nach oben, aufgesetzt.

Auf der Mähtellernabe 4 ist die äußere oder obere Stütztellernabe 6 frei drehbar gelagert, die den äußeren oder oberen Stützteller 7 trägt, der mit dem Außenrand des Mähtellers 5 - nicht dargestellt - einen gleichbleibenden Ringspalt bildet. Der Innenrand 11 des äußeren oder oberen Stütztellers 7 ist am Flansch 47 der äußeren Stütztellernabe 6 verschraubt. Der äußere Stützteller 7 ist an der Unterseite 26 nach innen und oben mit einer Einziehung 32 versehen, in der der innere Stützteller 9 angeordnet ist, der am Flansch 48 der inneren Stütztellernabe 8 aufgeschraubt ist und mit seinem Außenrand 33 eng an dem zylin drischen Teil der Einziehung 32 des äußeren Stütztellers 7 geführt ist.

Die innere Stütztellernabe 8 ist auf der äußeren Stütztellernabe 6 mittels einer Keilführung 34 unverdrehbar angebracht, die aus einer durchgehenden Keilnut 35 an der inneren Stütztellernabe 8 und einer Keilnut 36 an der äußeren Stütztellernabe 6 und aus einem Keil 37 besteht und in Axialrichtung 21 verschiebbar geführt. Die Verstellung geschieht mit einer Höhenverstellvorrichtung 10, die aus einem Ritzel 38 besteht, das in eine Außenverzahnung 39 einer Verstellhülse 40 eingreift und über ein Verstellgewinde die innere Stütztellernabe 8 verstellt. Das Ritzel 38 wird von einer Welle 42, die über ein Kupplungsstück 43 mit einem Schlüsselzapfen 41 gekuppelt ist, der an der inneren Stütztellernabe 8 gelagert ist und von der Unterseite 25 des inneren Stütztellers 9 her bedienbar ist, angetrieben.

Die axiale Verschiebbarkeit der inneren Stütztellernabe 8 ist mit einer Anschlagschraube 44 gehemmt, die eine Verstellung zwischen zwei Anschlägen 45,45' einer Längsnut 46 der äußeren Stütztellernabe 6, zuläßt.

Zwischen dem Innenrand 11 des äußeren oder oberen Stütztellers 7 und dem inneren oder unteren Stützteller 9 ist eine Abdichtung 12 angebracht.

Mit dem äußeren Stützteller 7 ist am Flansch 47 der äußeren oder oberen Stütztellernabe 6 ein Hüllrohr 17 mit seinem Flansch 19 unter Zwischenlage einer Ringdichtung 20 mitverschraubt, das an seinem Rand mit einer Aufweitung 18 versehen ist, an der die Dichtlippe 15 eines Faltenbalges 14 aus elastischem Material anliegt.

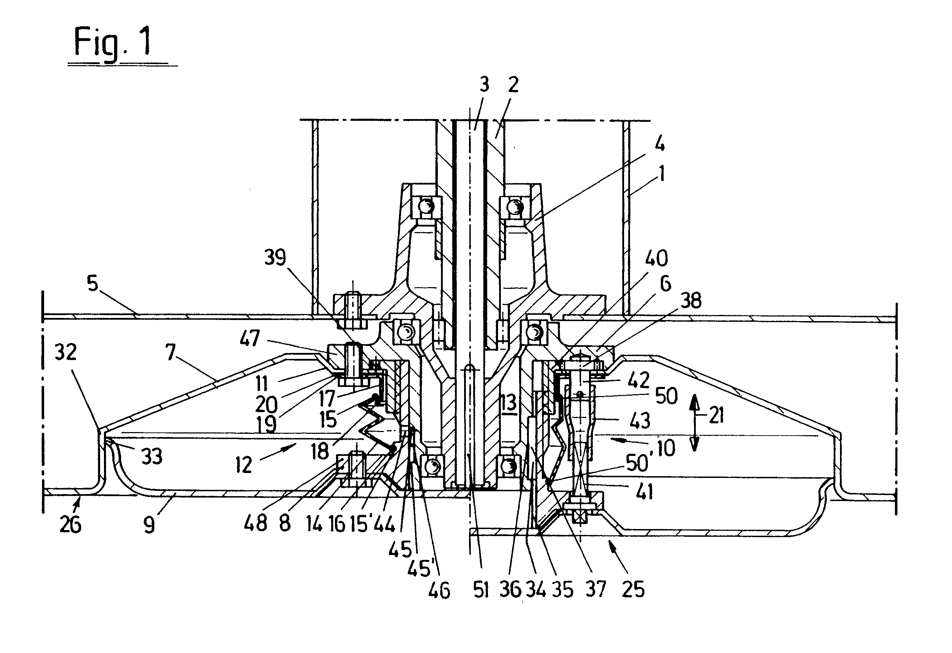

Die andere Dichtlippe 15' des Faltenbalges 14 liegt in einer Ringnut 16, die an der inneren Stütztellernabe 8 einge drückt ist. Der Faltenbalg 14 umschließt dabei eng die Höhenverstellvorrichtung 10 und die Stütztellerlagerung 13 und gestattet unter Beibehaltung der Dichtung die Verstellung des inneren Stütztellers 9 in axialer Richtung 21 (Fig. 1).

Bei einer anderen Ausführungsform ist ein inneres Hüllrohr 22 in der vorbeschriebenen Weise befestigt und ist von einem äußeren Hüllrohr 23 eng umgeben, dessen Rand 28 an dem inneren Hüllrohr 22 abstreifend geführt ist und in die innere Stütztellernabe 8 eingesetzt oder auf deren Flansch dichtend verschraubt ist.

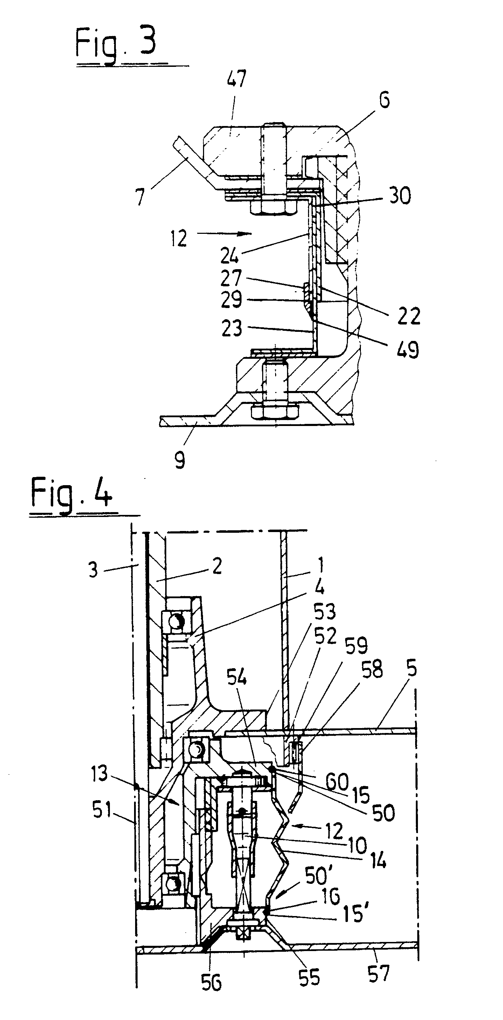

Zur Verbesserung der Abstreifwirkung kann auf dem äußeren Hüllrohr 23 ein Abstreifring 27 befestigt, z.B. verschraubt sein, der eine Abstreifkante 49 bildet (Fig. 3).

Eine weitere Ausführungsform der Abdichtung 12 ist mit einem weiteren Hüllrohr 24 versehen, das an dem Flansch 47 der äußeren Stütztellernabe 6 mitverschraubt ist, wie schon vorher für das innere Hüllrohr 22 beschrieben wurde.

Das innere Hüllrohr 22 bildet mit dem weiteren Hüllrohr 24 einen Ringspalt 30, in dem das äußere Hüllrohr 23 axial verschieblich geführt ist.

Das weitere, nunmehr äußerste Hüllrohr 24 schließt entweder mit dem Rand 29 an dem äußeren Hüllrohr 23 abstreifend ab oder es ist mit einem Abstreifring 27 versehen, der eine Abstreifkante 49 aufweist.

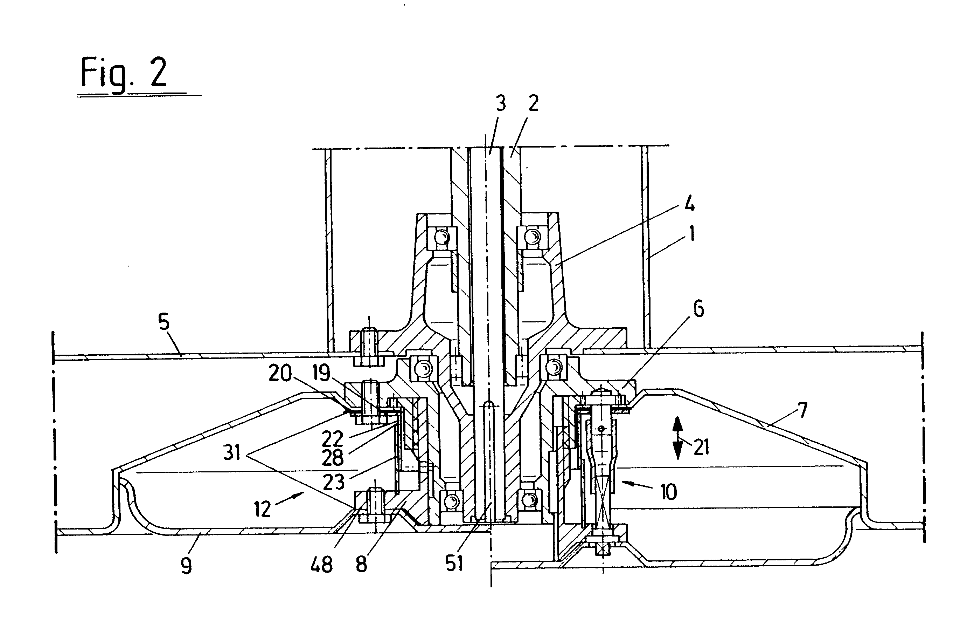

Bei einem Mähwerk bei dem nur ein einziger Stützteller 57, bei sonst im wesentlichen gleichbleibender Konstruktion vorgesehen ist (Fig. 4), ist die Anordnung des Mähtrommelzylinders 1 und die Lagerung der Mähtellernabe 4 auf dem Führungsrohr 2 der Antriebswelle 3 übereinstimmend mit der Anordnung nach Fig. 1 oder 2.

Dabei ist ein Innenrand 52 an dem Mähteller 5 angebracht, an dem die Abdichtung 12, z.B. in Form eines Faltenbalges 14, mit einem drehbar gelagerten Dichtrand 58, oder eines äußeren oder eines inneren Hüllrohres - nicht dargestellt -über ein eingesetztes Wälzlager 59 befestigt ist. Ebenso kann das Wälzlager 59 an dem äußeren Rand 53 der Mähtellernabe 4 aufgesetzt sein - nicht dargestellt

Die Abdichtung 12 ist an ihrem unteren Ende an der einzigen Stütztellernabe 56 dichtend befestigt, in gleicher Weise wie für Fig. 1 oder 2 beschrieben, wobei die Dichtlippe 15' des Dichtrandes 50' des Faltenbalges 14 in einer Ringnut 16 am unteren Rand 55 der einzigen Stütztellernabe 56 anliegt.

Bei hinreichender Dichtheit der Lagerung eines Lagerteiles 54 auf der Mähtellernabe 4 ist es auch genügend, die Abdichtung 12 zwischen dem Lagerteil 54 und der einzigen Stütztellernabe 56 mit einem Faltenbalg 14 in der früher beschriebenen Weise mit einer Ringnut 60 auf dem Lagerteil 54 und einer Dichtlippe 15 am Dichtrand 50 des Faltenbalges 14 zu gestalten.

Die Abdichtung 12 mit Hüllrohren kann zwischen dem Lagerteil 54 und der einzigen Stütztellernabe 56 in der zu Fig. 2 und 3 beschriebenen Weise ausgestaltet sein.

Legen de :

1 Mähtrommelzylinder
2 Führungsrohr
3 Antriebswelle
4 Mähtellernabe
5 Mähteller
6 äußere oder obere Stütztellernabe
7 äußerer oder oberer Stützteller
8 innere oder untere Stütztellernabe
9 innerer oder unterer Stützteller
10 Höhenverstellvorrichtung
11 Innenrand des äußeren oder oberen Stütztellers 7
12 Abdichtung
13 Stütztellerlagerung
14 Faltenbalg der Abdichtung 12
15,15′ Dichtlippen des Faltenbalges 14
16 Ringnut der inneren oder unteren Stütztellernabe
17 Hüllrohr
18 Aufweitung des Hüllrohres 17
19 Flansch des Hüllrohres 17
20 Ringdichtung des Hüllrohres 17
21 axiale Richtung
22 inneres Hüllrohr der Abdichtung 12
23 äußeres Hüllrohr der Abdichtung 12
24 weiteres Hüllrohr der Abdichtung 12
25 Unterseite des inneren Stütztellers 9
26 Unterseite des äußeren Stütztellers 7
27 Abstreifring des äußeren Hüllrohres 23 oder des weiteren Hüllrohres 24
28 Rand des äußeren Hüllrohres 23
29 Rand des weiteren Hüllrohres 24
30 Ringspalt zwischen den Hüllrohren 22 und 24
31 Höhenabstand zwischen den Stütztellern 7 und 9
32 Einziehung des äußeren Stütztellers 7
33 Außenrand des inneren Stütztellers 9
34 Keilführung
35 Keilnut der Keilführung 34 an der inneren Stütztellernabe 8
36 Keilnut der Keilführung 34 an der äußeren Stütztellernabe 6
37 Keil der Keilführung 34
38 Ritzel der Höhenverstellvorrichtung 10
39 Außenverzahnung
40 Verstellhülse
41 Schlüsselzapfen der Höhenverstellvorrichtung 10
42 Welle des Ritzels 38
43 Kupplungsstück für die Welle 42 des Ritzels 38
44 Anschlagschraube der Höhenverstellvorrichtung 10
45,45′ Anschläge der Längsnut 46
46 Längsnut der Höhenverstellvorrichtung 10
47 Flansch der äußeren Stütztellernabe 6
48 Flansch der inneren Stütztellernabe 8
49 Abstreifkante des Abstreifringes 27
50,50′ Dichtrand
51 Feder-Nutverbindung
52 Innenrand des Mähtellers 5
53 äußerer Rand der Mähtellernabe 4
54 Lagerteil der einzigen Stütztellernabe 56 unterer Rand der einzigen Stütztellernabe 56
56 einzige Stütztellernabe
57 einziger Stützteller
58 drehbar gelagerter Dichtrand
59 Wälzlager
60 Ringnut des Lagerteiles 54

## Ansprüche

1. Rotationsmähwerk mit wenigstens zwei Mähkreiseln, die jeweils an einem obenliegenden Mähwerksrahmen mit einer Antriebswelle gelagert sind, mit der eine, einen Mähteller tragende Mähtellernabe verdrehfest verbunden ist, auf der eine, einen äußeren Stützteller tragende äußere Stütztellernabe frei drehbar gelagert ist und ein innerer oder unterer Stützteller gegenüber einem äußeren oder oberen Stützteller axial verschiebbar geführt ist, dadurch gekennzeichnet, daß zwischen dem Bereich des Innenrandes (11) des äußeren oder oberen Stütztellers (7) und dem inneren oder unteren Stützteller (9) eine Abdichtung (12) angeordnet ist, die die Stütztellerlagerung (13) und die Höhenverstellvorrichtung (10) nach außen zu über einen veränderbaren Höhenabstand (31) zwischen den Stütztellern (7 und 9) dichtend abschließt.

2. Rotationsmähwerk mit wenigstens zwei Mähkreiseln, die jeweils an einem obenliegenden Mähwerksrahmen mit einer Antriebswelle gelagert sind, mit der eine, einen Mähteller tragende Mähtellernabe verdrehfest verbunden ist, auf der eine einzige Stütztellernabe oder ein Lagerteil für die einzige Stütztellernabe frei drehbar gelagert ist, die einen einzigen Stützteller trägt und mit diesem gegenüber dem Mähteller axial verschiebbar geführt ist, dadurch gekennzeichnet, daß zwischen einem Innenrand (52) des Mähtellers (5) oder dem äußeren Rand (53) der Mähtellernabe (4) oder einem drehbar auf der Mähtellernabe (4) oder der Antriebswelle (3) gelagerten Lagerteil (54) und der einzigen Stütztellernabe (56), vorzugsweise an deren unterem Rand (55), eine Abdichtung (12) angeordnet ist, die beiderseits dichtend befestigt ist und zumindest die Stütztellerlagerung (13) und wenigstens einen Teil der Höhenverstellvorrichtung (10) nach außen zu über den veränderbaren Höhen abstand (31) zwischen Mähteller (5) und einzigem Stützteller (57) dichtend abschließt.

3. Rotationsmähwerk nach Anspruch 1 oder 2, dadurch gekennzeichnet, daß die Abdichtung (12), die Stütztellerlagerung (13) und die Höhenverstellvorrichtung (10) eng umschließend, im wesentlichen aus einem Faltenbalg (14) aus elastischem Material, oder aus einem Federbalg, beispielsweise aus Metall, gebildet ist, der an den beiden Stütztellernaben (6 und 8) oder an dem Innenrand (52) des Mähtellers (5) oder an dem äußeren Rand (53) der Mähtellernabe (4) oder an dem Lagerteil (54) der einzigen Stütztellernabe (56) und der Stütztellernabe (56) mit Dichträndern (50,50') dichtend abschließend.

4. Rotationsmähwerk nach Anspruch 3, dadurch gekennzeichnet, daß der Faltenbalg (14) im wesentlichen zylindrisch geformt ist und mit Dichträndern (50,50') in Form von Dichtlippen (15,15') versehen ist, die einerseits in einer Ringnut (16) an der inneren oder unteren Stütztellernabe (8) oder an dem unteren Rand (55) der einzigen Stütztellernabe (56) und andererseits an einer Aufweitung (18) eines Hüllrohres (17) dichtend anliegen.

5. Rotationsmähwerk nach Anspruch 2 bis 4, dadurch gekennzeichnet, daß der Faltenbalg (14) einen drehbar gelagerten Dichtrand (58) aufweist, der entweder an dem Innenrand (52) des Mähtellers (5) oder dem äußeren Rand (53) der Mähtellernabe (4) oder an der einzigen Stütztellernabe (56), vorzugsweise an deren unterem Rand (55), auf einem Wälzlager (59) abdichtend angebracht ist, das zur freien Drehbarkeit des Mähtellers (5) gegenüber dem einzigen Stützteller (57) eingesetzt ist.

6. Rotationsmähwerk nach Anspruch 4 oder 5, dadurch gekennzeichnet, daß das Hüllrohr (17) die Höhenverstellvor richtung (10) an der äußeren oder oberen Stütztellernabe (6) oder an der einzigen Stütztellernabe (56) des einzigen Stütztellers (57) überdeckt und mit einem Flansch (19) und einer Ringdichtung (20), vorzugsweise zusammen mit dem äußeren oder oberen Stützteller (7), an dem Flansch (47) der äußeren oder oberen Stütztellernabe (6), oder mit dem einzigen Stützteller (57) am äußeren Rand (53) des Lagerteiles (54) der einzigen Stütztellernabe (56) des einzigen Stütztellers (57), verschraubt ist.

7. Rotationsmähwerk nach Anspruch 1, 2 oder 6, dadurch gekennzeichnet, daß die Abdichtung (12) aus einer Hüllrohrabdichtung bestehend, aus einem inneren und einem äußeren Hüllrohr (22,23) gebildet ist, die abstreifend ineinander geführt sind und die Stütztellerlagerung (13) und die Höhenverstellvorrichtung (10) umgeben und abdichten.

8. Rotationsmähwerk nach Anspruch 7, dadurch gekennzeichnet, daß das innere Hüllrohr (22) auf der äußeren oder oberen Stütztellernabe (6) oder auf dem Lagerteil (54) der einzigen Stütztellernabe (56) des einzigen Stütztellers (57) verschraubt ist.

9. Rotationsmähwerk nach Anspruch 7, dadurch gekennzeichnet, daß über dem äußeren Hüllrohr (23) welches das innere Hüllrohr (22) umgibt, ein weiteres Hüllrohr (24) von der Seite des inneren Hüllrohres (22) her angebracht ist, wobei zwischen diesen und dem inneren Hüllrohr (22) ein Ringspalt (30) for das äußere Hüllrohr (23) gebildet ist.

10. Rotationsmähwerk nach Anspruch 7 oder 8, dadurch gekennzeichnet, daß das jeweils äußere oder weitere Hüllrohr (23 oder 24) an seinem Rand (28,29) mit einem aufgesetzten Abstreifring (27) versehen ist.

Fig. 1

Fig. 2

EP 0 433 647 A1

## Fig. 3

## Fig. 4

**Europäisches Patentamt**

# EUROPÄISCHER RECHERCHENBERICHT

Nummer der Anmeldung

## EP 90 12 1580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X,A | EP-A-0 374 589 (ALOIS PÖTTINGER MASCHINENFA-BRIK)<br>* Spalte 2, Zeile 47 - Spalte 4, Zeile 9; Figuren 1-4 *<br>— — — | 1,7,10,2 | A 01<br>D 34/74<br>A 01 D 75/18 |
| X,A | DE-A-3 622 855 (KLÖCKNER-HUMBOLDT-DEUTZ)<br>* Spalte 3, Zeile 66 - Spalte 4, Zeile 44; Figuren 1, 2 *<br>— — — | 2,7,1,8 | |
| Y | DE-A-3 316 204 (FELLA-WERKE)<br>* Seite 5, Zeile 13 - Seite 6, Zeile 6 * * Seite 7, Zeilen 7 - 23; Figuren 1, 2, 5 *<br>— — — | 1,2,7,8,9 | |
| Y | FR-A-2 171 674 (REBER)<br>* Seite 2, Zeilen 1 - 16; Figur 1 *<br>— — — | 1,2,7,8,9 | |
| A | EP-A-0 272 385 (KLÖCKNER-HUMBOLDT-DEUTZ)<br>* Spalte 3, Zeile 14 - Spalte 5, Zeile 8; Figuren 1-3 *<br>— — — | 1,7,8 | |
| A | GB-A-2 000 954 (KIDD)<br>* Seite 4, Zeilen 7 - 11; Figur 4 *<br>— — — | 3 | |
| A | GB-A-2 159 684 (CLAAS SAULGAU)<br>— — — | | |
| A | DE-A-1 915 472 (WESTFÄLISCHE STAHL-PFLUG-FABRIK H.NIEMEYER)<br>— — — — — | | |

| | |
|---|---|
| | RECHERCHIERTE SACHGEBIETE (Int. Cl.5) |
| | A 01 D |

Der vorliegende Recherchenbericht wurde für alle Patentansprüche erstellt

| Recherchenort | Abschlußdatum der Recherche | Prüfer |
|---|---|---|
| Den Haag | 26 Februar 91 | WILLIAMS M.J. |